(19) Europäisches Patentamt

European Patent Office

Office européen des brevets

(11) **EP 0 621 161 B1**

(12) **EUROPÄISCHE PATENTSCHRIFT**

(45) Veröffentlichungstag und Bekanntmachung des
Hinweises auf die Patenterteilung:
**16.07.1997 Patentblatt 1997/29**

(51) Int. Cl.$^6$: **B60T 7/20**

(21) Anmeldenummer: **94100842.7**

(22) Anmeldetag: **21.01.1994**

(54) **Verfahren zum Ermitteln der Auflaufkraft eines Anhängers**

Determination method of the overrun force of a trailer

Procédé de détermination de la force d'inertie d'un remorque

(84) Benannte Vertragsstaaten:
**DE ES FR GB IT NL SE**

(30) Priorität: **22.04.1993 DE 4313198**

(43) Veröffentlichungstag der Anmeldung:
**26.10.1994 Patentblatt 1994/43**

(73) Patentinhaber: **KNORR-BREMSE Systeme für Nutzfahrzeuge GmbH**
**80809 München (DE)**

(72) Erfinder:
• **Gerum, Eduard, Dr.**
**D-83026 Rosenheim (DE)**

• **Holler, Gustav**
**H-1022 Budapest (HU)**

(74) Vertreter: **von Bülow, Tam, Dr.**
**Patentanwaltskanzlei**
**Mailänder Strasse 13**
**81545 München (DE)**

(56) Entgegenhaltungen:
**EP-A- 0 288 866**          **EP-A- 0 374 484**
**EP-A- 0 532 863**          **DE-A- 4 136 571**

• **: Manfred Mischke, Detlef Runge "Lastabhängige Bremskraftregelung an Sattelzügen", Bosch technische Berichte, Band 1, Heft 8, Juni 1965, S.152-164**

**Beschreibung**

Die vorliegende Erfindung bezieht sich auf ein Verfahren gemäß den Ansprüchen 1 und 4, mittels dem die beim Bremsvorgang von einem Anhänger auf ein Zugfahrzeug ausgeübte Auflaufkraft ermittelt werden kann. Erfindungsgemäß ist dabei unter dem Begriff "Anhänger" sowohl ein herkömmlicher Anhänger zu verstehen, der über eine Deichsel mit der Anhängerkupplung eines herkömmlichen Lastkraftwagens gekoppelt ist, als auch ein Sattelauflieger, der min der Sattelkupplung einer Sattelzugmaschine verbunden ist.

Bei einem Lastkraftwagen oder einer Sattelzugmaschine wird dem Anhänger (bzw. dem Sattelauflieger) über eine Luftdruckleitung oder dergleichen der zum Bremsen erforderliche Bremsdruck zugeführt. Dieser Bremsdruck sollte im Idealfall so eingestellt bzw. geregelt sein, daß der Anhänger mit genau der gleichen Bremsbeschleunigung verzögert wie sein Zugfahrzeug. Ein derart übereinstimmendes Bremsverhalten von Anhänger und Zugfahrzeug hat den wesentlichen Vorteil, daß der Bremsvorgang sehr genau steuerbar ist und weder Anhänger noch Zugfahrzeug ausbrechen können. Es ist allenfalls zulässig, die Bremverzögerung des Anhängers geringfügig größer zu wählen als die des Zugfahrzeugs, da in einem solchen Fall einerseits der Bremsvorgang noch beherrschbar ist und andererseits die wartungsintensiveren Bremsen des Zugfahrzeugs entsprechend geschont werden.

Da sich die Bremsleistung der Bremsen des Anhängers im Laufe der Zeit in einem anderen Umfang ändert als die des Zugfahrzeugs, kann das wie oben erläutert gewünschte Verhältnis der Bremsleistung von Anhänger und Zugfahrzeug nur bei Einhaltung relativ kurzer Serviceintervalle gewährleistet werden. Darüber hinaus ist zu beachten, daß sich das Gewicht des Anhängers in Abhängigkeit von der jeweiligen Beladung ändert, so daß eine genaue Einstellung ohnehin nur dann möglich ist, wenn eine sogenannte automatische lastabhängige Bremseinrichtung ("ALB") vorhanden ist, was jedoch nur bei modernen Anhängern der Fall ist. Um diese Nachteile zu vermeiden wird daher in letzter Zeit angestrebt, die Bremskraft bzw. -leistung des Anhängers im Fahrbetrieb in Abhängigkeit von der Bremsleistung des Zugfahrzeugs auf dem jeweils optimalen Wert durch Regelung des dem Anhänger zugeführten Bremsdrucks konstant zu halten.

Eine derartige Regelung der Bremsleistung des Anhängers ist jedoch nur dann möglich, wenn diejenige Kraft gemessen wird, mit der der Auflieger beim Bremsen auf die Kupplung des Zugfahrzeugs einwirkt. Diese üblicherweise als "Auflaufkraft" bezeichnete Krafteinwirkung des Anhängers sollte demzufolge bei dem o.g. Idealfall gleich Null sein oder allenfalls einen geringfügig negativen Wert aufweisen. Bei Kenntnis bzw. Messung der Auflaufkraft ist es daher relativ einfach, den Bremsdruck des Anhängers solange zu ändern, bis die Auflaufkraft schließlich den gewünschten Wert erreicht.

Zur Messung der Auflaufkraft muß indes an der betreffenden Kupplung ein Kraftaufnehmer bzw. eine Kraftmeßdose installiert werden; (DE 40 03 316 A1) aufgrund des sehr hohen Werts, den die Koppelkraft in der Praxis annehmen kann, ist der Preis für einen derartigen Kraftaufnehmer bzw. Sensor vergleichsweise hoch und kann durchaus in der Größenordnung von mehreren Tausend DM liegen. Trotz der mit der Regelung der Bremsleistung des Anhängers verbundenen Vorteile wurde aufgrund dieser hohen Kosten bislang weitgehend darauf verzichtet.

Aus der EP 0 374 484 ist ein Verfahren zum Abstimmen der Bremswirkung an einer Sattelzugmaschine und einem Sattelanhänger bekannt, bei dem durch das Messen der Achslasten aller Achsen der Sattelzugmaschine, der Fahrzeugbeschleunigung, der Fahrbahnlängsneigung sowie unter Verwendung konstanter Daten der Sattelzugmaschine, wie z.B. dem Radstand, das Gewicht des Sattelanhängers bei ungebremster Fahrt ermittelt wird und daraus die Achslast des Sattelanhängers beim Bremsen berechnet wird, worauf eine Bremsdruckeinsteuerung entsprechend den ermittelten Achslasten erfolgt.

Aus der DE-Zeitschrift "Bosch Technische Berichte, Band 1, Heft 8, Juni 1965, S. 152-164: Manfred Mitschke, Detlef Runge: "Lastabhängige Bremskraftregelung an Sattelzügen" ist es bekannt, die Bewegungsgleichungen für einen Sattelzug aufzustellen, wobei die Achslasten aller Achsen durch Meßfühler gemessen werden und dann das Kräftegleichgewicht der horizontalen Kräfte, das Kräftegleichgewicht der vertikalen Kräfte und das Momentengleichgewicht ermittelt werden.

Die beiden letzt genannten Druckschriften setzen also auch voraus, daß zumindest die Achslasten aller Achsen des Sattelzugfahrzeuges gemessen werden, was bei luftgefederten Fahrzeugen durch Messung des Balgdruckes oder bei stahlgefederten Fahrzeugen durch Potentiometer gemessen wird. Weiter ist es erforderlich, bestimmte Geometriedaten der Sattelzugmaschine und des Sattelaufliegers zu kennen, wie z.B. vertikale und horizontale Lage der Achsen und des Königszapfens relativ zum Schwerpunkt des Zugfahrzeuges und des Aufliegers. Diese Daten sind jedoch in der Praxis meistens nicht verfügbar, insbesondere wenn unterschiedliche Auflieger an eine Sattelzugmaschine angekoppelt werden. Darüber hinaus sind nur sehr wenige Sattelzugmaschinen auch an der Vorderachse mit einer Luftfederung ausgerüstet, so daß zur Messung der Vorderachslast teure und störanfällige Meßeinrichtungen, wie Potentiometer, verwendet werden müssen.

Aufgabe der Erfindung ist es, das Verfahren derart weiterzubilden, daß die jeweilige Auflaufkraft mit geringst möglichen Kosten ermittelt werden kann, insbesondere wenn bestimmte Geometriedaten des Fahrzeugverbundes oder die Vorderachslast des Zugfahrzeuges nicht bekannt sind.

Diese Aufgabe wird für Lastkraftwagen mit Anhängerkupplung durch die im Patentanspruch 1 und für Sattelzüge durch die im Patentanspruch 4 angegebenen Merkmale gelöst.

Die Erfindung geht von dem Gedanken aus, daß der jeweilige bzw. momentane Wert der Auflaufkraft ggf. auch aus den bei modernen Zugfahrzeugen bereits vorhandenen Meßsignalen abgeleitet werden kann, ohne die Auflaufkraft direkt mittels eines Kraftaufnehmers zu messen, so daß ein solcher nicht benötigt wird und sich die Kosten für die Ermittlung der Auflaufkraft auf den Einsatz einer entsprechend konstruierten oder modifizierten Steuereinheit beschränken. Da die Auflaufkraft insbesondere bei Vorhandensein eines Zentralrechners - wie dies bei modernen Zugfahrzeigen stets der Fall ist - lediglich durch geeignete Änderung des zentralen Steuerprogramms errechnet werden kann, ist es ggf. sogar möglich, die Kosten hierfür auf einen vernachlässigbaren Wert zu senken.

Zum Erreichen des genannten Ziels wird vorgeschlagen, die am Zugfahrzeug bereits vorhandenen Meßwerte in der Weise heranzuziehen, daß [a] das Kräftegleichgewicht der am Zugfahrzeug in vertikaler bzw. y-Richtung wirkenden Kräfte bestimmt wird, daß [b] das Kräftegleichgewicht der am Zugfahrzeug in horizontaler bzw. x-Richtung wirkenden Kräfte bestimmt wird und daß [c] aus dem derart bestimmten vertikalen und horizontalen Kräftegleichgewicht die Auflaufkraft ermittelt wird. Es wurde gefunden, daß es die bei modernen Zugfahrzeugen vorhandenen Meßwerte erlauben, anhand dieser Kräftegleichgewichte den jeweiligen Wert für die Auflaufkraft relativ genau zu berechnen. Im einzelnen werden folgende Verfahren von der Erfindung bevorzugt:

Wenn es sich bei dem Zugfahrzeug um einen herkömmlichen Lastkraftwagen (LKW) mit Anhängerkupplung handelt, d.h. also nicht um eine Sattelzugmaschine, so daß folglich die Auflaufkraft (nachfolgend mit $F_k$ bezeichnet) des Anhängers ausschließlich in horizontaler bzw. x-Richtung wirkt, wird die Auflaufkraft $F_k$ mittels folgender Gleichung ermittelt:

$$\bar{F}_k = \frac{\left(\bar{F}_1 + \bar{F}_2\right)}{g} \cdot a - \bar{F}_a$$

In dieser Formel ist mit $F_1$ die Vorderachslast des Lastkraftwagens, mit $F_2$ seine Hinterachslast, mit $F_a$ die Bremskraft, mit $a$ die Bremsbeschleunigung und mit $g$ die Erdbeschleunigung bezeichnet. Aufgrund der bei modernen Lastkraftwagen nunmehr gebräuchlichen Luftfederung können aus dem Luftdruck der Federung an der betreffenden Achse die Werte $F_1$ und $F_2$ der Vorder- bzw. Hinterachslast sehr leicht erfaßt bzw. gemessen werden; diese Größen der Gleichung sind somit bekannt. Ebenso kann aus der Stellung des Bremspedals oder aus dem momentanen Bremsdruck der Wert $F_a$ der Bremskraft ermittelt werden; schließlich ist auch die tatsächliche (Brems-) Beschleunigung anhand der Ausgangssignale der Sensoren des Antiblockiersystems (ABS) bekannt. Da es sich bei der Erdbeschleunigung $g$ um eine Konstante handelt, kann folglich aus der genannten Gleichung der Wert der Auflaufkraft ohne Verwendung eines entsprechenden Kraftaufnehmers bzw. Kraftsensors bestimmt werden.

Obgleich, wie vorstehend erläutert wurde, der Wert $F_a$ der Bremskraft beispielsweise anhand des Bremsdrucks ermittelt werden kann, liegt in der Praxis ein Problem darin, daß diese Meßgröße nur eine indirekte Bestimmung der tatsächlich aufgebrachten Bremsleistung zuläßt. Je nach Verschleißzustand und Temperatur der Bremse wird nämlich die tatsächliche Bremsleistung von einem bestimmten Sollwert abweichen, so daß der Wert $F_a$ mit einer entsprechenden Unsicherheit behaftet ist. Um den Einfluß der Unsicherheit der Meßgröße $F_a$ auf das Ergebnis der Berechnung so gering wie möglich zu halten, wird vorgeschlagen, auch das auf den Schwerpunkt (nachfolgend mit $S$ bezeichnet) des Lastkraftwagens bezogene Momentengleichgewicht zu bestimmen. In diesem Fall ist es nämlich möglich, die Auflaufkraft $F_k$ mittels folgender Gleichung zu bestimmen:

$$\bar{F}_k = \frac{\bar{F}_1 \left(x_1 - \frac{a}{g} \cdot y_{12}\right) + \bar{F}_2 \left(x_2 - \frac{a}{g} \cdot y_{12}\right)}{y_{ak}}$$

in der mit $x_1$, $x_2$ und $y_{12}$ die jeweilige relative Lage der Achsen des Lastkraftwagens zu seinem Schwerpunkt $S$ und mit $y_{ak}$ der vertikale Abstand der Kupplung zur Radachse bezeichnet sind. Der Wert $y_{ak}$ des vertikalen Abstands der Kupplung zur Radachse ist von der Geometrie des Fahrzeugs abhängig und damit eine lediglich einmal einzugebende Konstante (d.h. ein Eingabewert).

Die Werte von $x_1$ und $x_2$ lassen sich gemäß einem besonderen Aspekt der Erfindung auf einfache Weise dadurch ermitteln, daß das Momentengleichgewicht zu dem Zeitpunkt bestimmt wird, zu dem der Lastkraftwagen im beschleunigungslosen Zustand rollt, da in diesem Fall aus dem Achsabstand bzw. Radstand eine einfache Berechnung möglich ist, wie aus der Figurenbeschreibung im einzelnen hervorgeht. Der Rollzustand des Lastkraftwagens kann auf einfache Weise z.B. von den Ausgangssignalen eines elektronischen Diesel-Einspritzgeräts ("Electronic Diesel Control - EDC") abgeleitet werden und stellt damit eine Meßgröße dar. Ggf. ist es auch möglich, die Werte von $x_1$ und $x_2$ auf gleiche

EP 0 621 161 B1

Weise dann zu bestimmen, wenn der Lastkraftwagen steht oder geparkt ist; hier ist jedoch zu berücksichtigen, daß diese Messung nur dann korrekte Werte liefert, wenn in diesem Stopzustand eine Kräftefreiheit vorliegt, d.h. der Lastkraftwagen muß z.B. völlig ausgekuppelt sein.

Die relative vertikale Lage $y_{12}$ der Achsen des Lastkraftwagens läßt sich demgegenüber mittels folgender Formel ermitteln:

$$y_{12} = y_{ak} - \frac{\left(F_1 \cdot x_1 + F_2 \cdot x_2 - F_a \cdot y_{ak}\right)}{\left(F_1 + F_2\right)} \cdot \frac{g}{a}$$

Da in diese Formel der etwas unsichere Wert $F_a$ vergleichsweise wenig eingeht, ist das Ergebnis von $y_{12}$ und damit erst recht das von $F_k$ relativ genau. Im übrigen kann gemäß einem weiteren wesentlichen Aspekt der Erfindung nach der Lehre des Anspruchs 2 die genannte Formel auch mehrfach berechnet und anschließend der Mittelwert hieraus errechnet werden.

Wenn es sich bei dem Zugfahrzeug demgegenüber um eine Sattelzugmaschine mit Sattelkupplung handelt, bei der folglich die Auflaufkraft $F_k$ des Aufliegers sowohl in horizontaler als auch in vertikaler Richtung wirkt und sich somit aus zwei Komponenten $F_{kx}$ und $F_{ky}$ zusammensetzt, kann gemäß der Lehre des Anspruchs 7 zur Regelung der Bremskraft des Aufliegers das Verhältnis $F_{kx}/F_{ky}$ der horizontalen zur vertikalen Komponente der Auflaufkraft mit dem Verhältnis $a/g$ der Fahrzeugbeschleunigung $a$ zur Erdbeschleunigung $g$ verglichen werden. Wenn nämlich das ermittelte Verhältnis $F_{kx}/F_{ky}$ ungefähr genauso groß wie das Verhältnis $a/g$ ist, ist die Bremsleistung des Sattelaufliegers genau richtig eingestellt, während ein negatives oder positives Vergleichsergebnis einen auflaufenden bzw. ziehenden Sattelauflieger kennzeichnen.

In der Mehrzahl der Fälle besitzen Sattelzugmaschinen lediglich an der Hinterachse eine Luftfederung, während an der Vorderachse lediglich eine Blatt- oder Spiralfeder-Aufhängung vorgesehen ist. Demgemäß steht an der Vorderachse kein Meßwert für die Größe von $F_1$ zur Verfügung. In diesem Fall ist es nach der Lehre des Anspruchs 9 möglich, das gewünschte Verhältnis $F_{kx}/F_{ky}$ der horizontalen zur vertikalen Komponente der Auflaufkraft unter zusätzlicher Berücksichtigung des Momentengleichgewichts zu bestimmen, wobei hier eine Kenntnis der Kraft $F_1$ nicht erforderlich ist. Das gewünschte Verhältnis $F_{kx}/F_{ky}$ wird nach folgender Gleichung ermittelt:

$$\frac{F_{ky}}{F_{kx}} = \frac{F_2 \cdot \left(x_2 - x_1\right) + F_a \cdot \left(y_k - y_{12}\right) + m_z \left(x_1 \cdot g - y_k \cdot a\right)}{\left(m_z \cdot a - F_a\right) \cdot \left(x_1 - x_k\right)}$$

in der mit $F_a$ die Bremskraft, mit $y_k$ und $x_k$ die relative vertikale bzw. horizontale Lage der Aufliegerkupplung zum Schwerpunkt $S$ der Sattelzugmaschine und mit $x_1$, $x_2$ und $y_{12}$ die jeweilige relative Lage seiner Achsen zum Schwerpunkt $S$ bezeichnet sind. Hierbei ist zu beachten, daß bei einer Sattelzugmaschine im Gegensatz zu einem normalen Lastkraftwagen die Werte von $x_1$, $x_2$ und $y_{12}$ bekannt sind, da eine Sattelzugmaschine (mit Ausnahme vernachlässigbarer Größen, wie dem Tankinhalt etc.) stets in etwa das gleiche Gewicht aufweist, so daß diese Werte fahrzeugspezifisch sind und somit nur einmal bestimmt zu werden brauchen.

Da der Wert $F_a$ der Bremskraft, wie bereits erläutert wurde, mit einer nicht zu vermeidenden Unsicherheit behaftet ist, empfiehlt es sich jedoch, nach der Lehre des Anspruchs 11 folgende Gleichungen zur Berechnung des Verhältnisses $F_{kx}/F_{ky}$ heranzuziehen:

$$F_{ky} = \frac{N_1 \cdot \dfrac{y_a - y_{ak}}{x_a - x_{ak}} - \dfrac{m_a \cdot a \cdot x_a}{x_a - x_{ak}} + \dfrac{m_a \cdot g \cdot y_a}{x_a - x_{ak}} + m_z \cdot a \cdot K_1 \cdot \dfrac{y_a - y_{ak}}{x_a - x_{ak}}}{K_1 + K_2 \cdot \dfrac{y_a - y_{ak}}{x_a - x_{ak}}}$$

$$F_{kx} = \frac{N_1 - F_{ky} \cdot \left(x_1 + x_k\right)}{K_1}$$

wobei die Konstanten $N_1$, $K_1$ und $K_2$ wie folgt definiert sind:

$$N_1 := m_z \cdot (g \cdot x_1 - a \cdot y_k) + F_2(x_2 - x_1) \qquad K_1 := y_k - y_{12} \qquad K_2 := x_1 - x_k$$

Es ist ersichtlich, daß das Verhältnis $F_{kx}/F_{ky}$ auf diese Weise ohne die Verwendung des unsicheren Meßwerts $F_a$ bestimmt werden kann, so daß das Ergebnis entsprechend genau ist.

Die Erfindung wird nachstehend anhand der Beschreibung von Ausführungsbeispielen unter Bezugnahme auf die Zeichnung näher erläutert. Es zeigen:

Fig.1 eine Schemaskizze zur Erläuterung der bei einem Lastkraftwagen vorliegenden Kräfte- und Momenteverhältnisse bei angekoppeltem Anhänger;

Fig.2 eine Schemaskizze zur Erläuterung der bei einer Sattelzugmaschine vorliegenden Kräfte- und Momenteverhältnisse bei angekoppeltem Sattelauflieger; und

Fig.3 eine alternative Schemaskizze der beim Sattelauflieger gegebenen Verhältnisse.

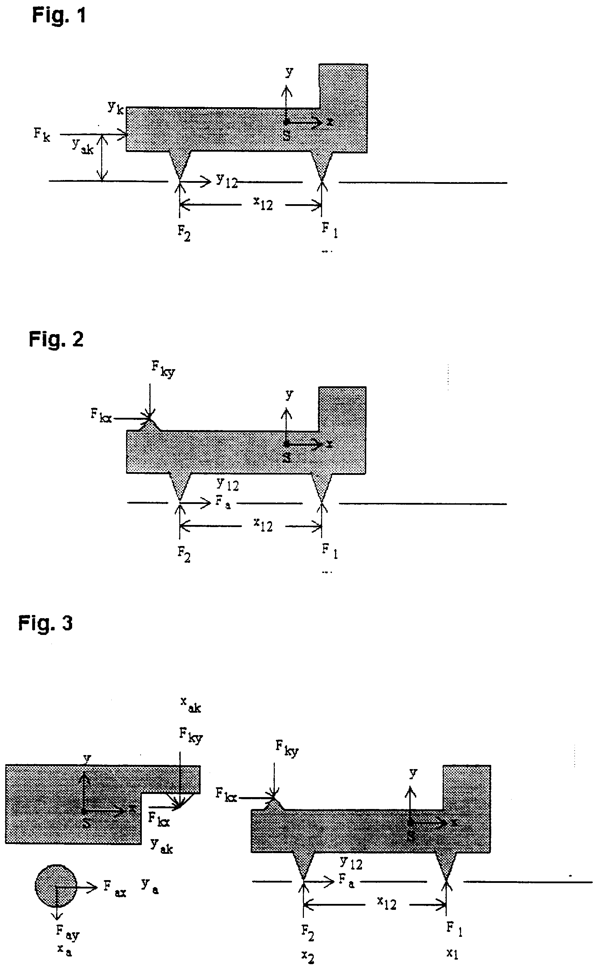

Nachfolgend wird zunächst ein Ausführungsbeispiel der Erfindung unter Bezugnahme auf Fig.1 erläutert, bei dem die Auflaufkraft für einen Lastkraftwagen (LKW) beschrieben wird. Zum besseren Verständnis des in der Fig.1 lediglich schematisch gezeigten Lastkraftwagens werden zunächst die dort angegebenen Geometriebeziehungen und Kraftwirkungen anhand nachfolgender **Tabelle 1** aufgelistet:

| Abkürzung | Bezeichnung | Dimension | Eingabegröße | Meßwert | Unbekannte |
|---|---|---|---|---|---|
| $m_z$ | Masse LKW | kg | | | ✓ |
| $F_1$ | Vorderachslast LKW | N | | ✓ | |
| $x_1$ | x-Koordinate Vorderachse | m | | | ✓ |
| $F_2$ | Hinterachslast LKW | N | | ✓ | |
| $x_2$ | x-Koordinate Hinterachse | m | | | ✓ |
| $y_{12}$ | y-Koordinate Achsen | m | | | ✓ |
| $F_a$ | Antriebs-/Bremskraft LKW | N | | ✓ * | |
| $y_k$ | y-Koordinate Anhänger-kupplung | m | | | ✓ |
| $a$ | Fahrzeugbeschleunigung | m/s$^2$ | | ✓ | |
| $y_{ak}$ | Abstand Anhänger-kupplung - Achse | m | ✓ | | |
| $x_{12}$ | Radstand LKW | m | ✓ | | |

Mit dem Symbol * ist in der Tabelle 1 angedeutet, daß der Meßwert $F_a$ mit einer gewissen Unsicherheit behaftet ist, d.h. nicht genau die tatsächliche Bremskraft ausdrückt. Dies ist darauf zurückzuführen, daß je nach Verschleißzustand und Temperatur der Bremse die tatsächliche Bremsleistung von einem bestimmten Sollwert abweicht, so daß der Wert $F_a$ mit einer entsprechenden Unsicherheit behaftet ist.

Aus der Fig.1 können die folgenden Gleichungen abgeleitet werden:

Kräftegleichgewicht der y-Komponenten :

$$1. \quad F_1 + F_2 - m_z \cdot g = 0 \quad \Rightarrow \quad m_z = \frac{F_1 + F_2}{g}$$

Kräftegleichgewicht der x-Komponenten :

$$2. \quad F_k + F_a - m_z \cdot a = 0 \quad \Rightarrow \quad F_a = \frac{F_1 + F_2}{g} \cdot a - F_k$$

Momentengleichgewicht :

$$3. \; F_1 \cdot x_1 + F_2 \cdot x_2 - F_a \cdot y_{12} - F_k \cdot y_k = 0$$

Durch geeignete Umformung der Gleichungen 1. und 2. läßt sich die gesuchte Größe der Auflaufkraft $F_k$ wie folgt angeben:

$$F_k = \frac{(F_1 + F_2)}{g} \cdot a - F_a$$

In dieser Gleichung sind alle Größen Meßwerte oder Konstante, so daß der Wert von $F_k$ bestimmt werden kann, und zwar ohne daß ein Sensor für die Auflaufkraft benötigt werden wurde.

Gemäß einer zweiten Ausführungsform dieses ersten Ausführungsbeispiels der Erfindung wird die dem Meßwert $F_a$ innewohnende Ungenauigkeit bzw. deren Einfluß auf das Endergebnis durch zusätzliche Einbeziehung des Momentengleichgewichts (Gleichung 3) verringert.

Unter Berücksichtigung der Tatsache, daß der vertikale Abstand der Anhängerkupplung zu den Achsen ($y_{ak}$) gemäß folgender Gleichung 4. in Beziehung zu den Größen $y_{12}$ und $y_k$ steht:

$$4. \; y_{ak} = y_{12} - y_k$$

kann die gesuchte Auflaufkraft $F_k$ auch mittels folgender Gleichung bestimmt werden:

$$F_k = \frac{F_1\left(x_1 - \frac{a}{g} \cdot y_{12}\right) + F_2\left(x_2 - \frac{a}{g} \cdot y_{12}\right)}{y_{ak}}$$

In dieser Formel lassen sich die Größen $x_1$ und $x_2$ aus der Gleichung 3 dann bestimmen, wenn die Eingabe der Meßwerte zu dem Zeitpunkt erfolgt, zu dem sich das Fahrzeug im rollenden, unbeschleunigten Zustand befindet, was in der Praxis leicht aus dem Signal eines elektronischen Diesel-Einspritzgeräts ("Electronic Diesel Control - EDC") abgeleitet werden kann. Ggf. können diese Werte auch dann erfaßt werden, wenn der Lastkraftwagen gerade anhält, oder auch unmittelbar nach Einschalten der Zündung. Wie bereits eingangs erläutert wurde, ist im letzteren Fall jedoch zu berücksichtigen, daß diese Messung nur dann korrekte Werte liefert, wenn eine Kräftefreiheit vorliegt, d.h. es ist erforderlich, daß der Lastkraftwagen völlig ausgekuppelt ist. Dies müßte somit durch entsprechende Meßsignale überprüft werden.

Die Werte für $x_1$ und $x_2$ lauten aufgrund der obigen Annahme (unbeschleunigter Zustand) somit wie folgt:

$$5. \; F_1 \cdot x_1 + F_2 \cdot x_2 = 0 \quad \text{und} \quad 5. \; x_{12} = x_1 + x_2 \quad (\text{Radstand } x_{12})$$

$$x_2 = x_{12} \cdot \frac{F_1}{F_1 - F_2} \quad \text{und} \quad x_1 = x_{12} \cdot \frac{F_2}{F_2 - F_1}$$

Die in der oben genannten Gleichung noch unbekannte Größe $y_{12}$ kann aus folgenden Umformungen abgeleitet werden:

$$\text{aus 3.: } F_1 \cdot x_1 + F_2 \cdot x_2 - F_a \cdot y_{12} - F_k \cdot y_k = 0 \text{ und 2.: } F_k = m_z \cdot a - F_a$$

folgt:

$$F_1 \cdot x_1 + F_2 \cdot x_2 - F_a \cdot y_{12} - F_k \cdot y_k = 0$$

$$F_1 \cdot x_1 + F_2 \cdot x_2 - F_a \cdot y_{12} - (m_z \cdot a - F_a) \cdot y_k = 0$$

$$\frac{\left(-F_1 \cdot x_1 - F_2 \cdot x_2 + F_a \cdot y_{12}\right)}{\left(-m_z \cdot a + \bar{F}_a\right)} = \bar{y}_k$$

jetzt noch $m_z$ aus 1. einsetzen:

$y_k$ wird als Mittelwert aus vielen Messungen $F_1, F_2, F_a$ ermittelt:

Mit $y_{12} = y_{ak} - y_k$ folgt:

$$7. \quad y_k = \frac{F_1 \cdot x_1 + F_2 \cdot x_2 - F_a \cdot y_{ak}}{m_z \cdot a} = \frac{\left(F_1 \cdot x_1 + F_2 \cdot x_2 - F_a \cdot y_{ak}\right)}{\left(F_1 + F_2\right)} \cdot \frac{g}{a}$$

$$3. \quad y_{12} = y_{ak} - \frac{\left(F_1 \cdot x_1 + F_2 \cdot x_2 - F_a \cdot y_{ak}\right)}{\left(F_1 + F_2\right)} \cdot \frac{g}{a}$$

Da in diese Formel der etwas unsichere Wert $\mathbf{F_a}$ vergleichsweise wenig eingeht und da darüber hinaus der Wert $\mathbf{y_k}$ mehrfach berechnet und anschließend der Mittelwert hieraus errechnet wird, ist das Ergebnis von $\mathbf{y_{12}}$ und damit erst recht das von $\mathbf{F_k}$ relativ genau. Beispielsweise ist es auch möglich, die Berechnung von $\mathbf{y_k}$ solange zu wiederholen, bis sich der Mittelwert kaum mehr ändert, so daß geschlossen werden kann, daß der Wert von $\mathbf{F_a}$ weitgehend korrekt ist.

Wenn es sich bei dem Zugfahrzeug im Gegensatz zum ersten Ausführungsbeispiel um eine Sattelzugmaschine (SZM) mit Sattelkupplung handelt, wird die Auflaufkraft nach der Lehre der folgenden Ausführungsbeispiele berechnet. Zunächst werden nunmehr die in den auf diese Ausführungsbeispiele gerichteten Fig.2 und 3 gezeigten Kräfte und Geometriebeziehungen anhand folgender **Tabelle 2** näher beschrieben.

| Abkür-zung | Bezeichnung | Dimension | Eingabe-größe | Meßwert | Unbekannte |
|---|---|---|---|---|---|
| $m_z$ | Masse SZM | kg | ✓ | | |
| $F_1$ | Vorderachslast SZM | N | | | ✓ |
| $x_1$ | x-Koordinate Vorderachse | m | ✓ | | |
| $y_{12}$ | y-Koordinate Achse | m | ✓ | | |
| $F_2$ | Hinterachslast SZM | N | | ✓ | |
| $x_2$ | x-Koordinate Hinterachse | m | ✓ | | |
| $F_a$ | Antriebs/Brems-kraft SZM | N | | ✓ * | |
| $F_{ky}$ | vertikale Sattelkraft | N | | | ✓ |
| $F_{kx}$ | horizontale Sattelkraft | N | | | ✓ |
| $x_k$ | x-Koordinate Sattelkupplung | m | ✓ | | |
| $y_k$ | y-Koordinate Sattelkupplung | m | ✓ | | |
| $a$ | Fahrzeugbeschleunigung | $m/s^2$ | | ✓ | |
| $m_a$ | Masse des Aufliegers | kg | | | ✓ |
| $x_{ak}$ | x-Koordinate Sattelkupplung | m | | | ✓ |
| $y_{ak}$ | y-Koordinate Sattelkupplung | m | | | ✓ |
| $F_{ay}$ | Achslast Auflieger | N | | | ✓ |
| $F_{ax}$ | Bremskraft Auflieger | N | | | ✓ |
| $x_a$ | x-Koordinate Aufliegerachse | m | | | ✓ |
| $y_a$ | y-Koordinate Aufliegerachse | m | | | ✓ |

Aus einem Vergleich der Tabelle 1 mit obiger Tabelle 2 wird deutlich, daß bei einer Sattelzugmaschine im Gegensatz zu einem normalen Lastkraftwagen die Werte von $x_1$, $x_2$ und $y_{12}$ bekannt sind, da eine Sattelzugmaschine (mit Ausnahme vernachlässigbarer Größen, wie insbesondere dem Tankinhalt usw.) stets in etwa das gleiche Gewicht aufweist, so daß diese Werte als fahrzeugspezifisch anzusehen sind und somit nur einmal bestimmt zu werden brauchen (Eingabegröße).

Im Falle einer Sattelzugmaschine wirkt die Auflaufkraft $F_k$ des Aufliegers sowohl in horizontaler als auch in vertikaler Richtung und setzt sich somit aus zwei Komponenten $F_{kx}$ und $F_{ky}$ zusammen. Um zu bestimmen, ob die Bremsleistung des Sattelaufliegers richtig eingestellt wird, geht die Erfindung von der Überlegung aus, daß es hierbei ausreichend ist, zur Regelung der Bremskraft des Aufliegers das Verhältnis $F_{kx}/F_{ky}$ der horizontalen zur vertikalen Komponente der Auflaufkraft mit dem Verhältnis $a/g$ der Fahrzeugbeschleunigung $a$ zur Erdbeschleunigung $g$ vergleichen. Wenn nämlich das ermittelte Verhältnis $F_{kx}/F_{ky}$ ungefähr genauso groß wie das Verhältnis $a/g$ ist, ist die Bremsleistung des Sattelaufliegers weitgehend korrekt eingestellt, während ein negatives oder positives Vergleichsergebnis einen auflaufenden bzw. ziehenden Sattelauflieger kennzeichnen.

Die Kräfte- und Momentengleichgewichte lauten in diesem Falle wie folgt:

Kräftegleichgewicht der y-Komponenten :

$$1.\ F_1 + F_2 + F_{ky} - m_z \cdot g = 0 \Rightarrow F_1 = m_z \cdot g - F_2 - F_{ky}$$

Kräftegleichgewicht der x-Komponenten :

$$2.\ F_{kx} + F_a - m_z \cdot a = 0 \Rightarrow F_a = m_z \cdot a - F_{ky} \cdot \frac{a}{g}$$

Momentengleichgewicht :

$$3.\ F_1 \cdot x_1 + F_2 \cdot x_2 + F_{ky} \cdot x_k - F_a \cdot y_{12} - F_{kx} \cdot y_k = 0$$

Wenn ein Meßwert für $F_1$ aufgrund fehlender Vorderachs-Luftfederung nicht zur Verfügung steht, so kann gemäß der Ausführungsform, die anhand der Fig.2 beschrieben ist, das gesuchte Verhältnis wie folgt abgeleitet werden, indem Gleichung 1. nach $F_1$ aufgelöst, Gleichung 2. nach $F_{kx}$ aufgelöst und diese beiden Größen in Gleichung 3. eingesetzt werden und daraufhin nach $F_{ky}$ aufgelöst wird:

$$(m_z \cdot g - F_2 - F_{ky}) \cdot x_1 + F_2 \cdot x_2 + F_{ky} \cdot x_k - F_a \cdot y_{12} - (m_z \cdot a - F_a) \cdot y_k = 0$$

$$x_1 \cdot m_z \cdot g - x_1 \cdot F_2 - x_1 \cdot F_{ky} + F_2 \cdot x_2 + F_{ky} \cdot x_k - F_a \cdot y_{12} - y_k \cdot m_z \cdot a + y_k \cdot F_a = 0$$

$$F_2 \cdot (x_2 - x_1) + F_a \cdot (y_k - y_{12}) - F_{ky} \cdot (x_1 - x_k) + m_z \cdot (x_1 \cdot g - y_k \cdot a) = 0$$

$$F_{ky} = \frac{F_2 \cdot (x_2 - x_1) + F_a \cdot (y_k - y_{12}) + m_z (x_1 \cdot g - y_k \cdot a)}{(x_1 - x_k)}$$

Damit ergibt sich das gesuchte Verhältnis wie folgt:

$$\frac{F_{kx}}{F_{ky}} = \frac{F_2 \cdot (x_2 - x_1) + F_a \cdot (y_k - y_{12}) + m_z (x_1 \cdot g - y_k \cdot a)}{(m_z \cdot a - F_a) \cdot (x_1 - x_k)}$$

Diese aus den in den Fig.2 angenommenen Beziehungen abgeleitetet Formel hat den Nachteil, daß wiederum, wie im ersten Ausführungsbeispiel, die unsichere Größe $F_a$ auftaucht. Dieser Nachteil kann indes mittels der in der Fig.3 angegebenen Beziehung, die auch die Geometrie des Sattelaufliegers berücksichtigt, wie folgt umgangen werden:
Aus dem Sattelauflieger ergeben sich folgende Gleichungen:

4. $F_{ay} - F_{ky} - m_a \cdot g = 0 \Rightarrow$ 4.a. $F_{ay} = F_{ky} + m_a \cdot g$

5. $F_{ax} - F_{kx} - m_a \cdot a = 0 \Rightarrow$ 5.a. $F_{ax} = F_{kx} + m_a \cdot a$

6. $F_{ay} \cdot x_a - F_{ky} \cdot x_{ak} - F_{ax} \cdot y_a + F_{kx} \cdot y_{ak} = 0$

In diesen Gleichungen lassen sich für den als ungebremst ($F_{ax} = 0$) und als im rollenden Zustand befindlich (a = 0 bzw. EDC = 0) angenommenen Sattelauflieger folgende Änderungen durchführen:

7. $F_{kx} = -m_a \cdot a$

8. $(F_{ay} \cdot x_a - F_{ky} \cdot x_{ak}) + F_{kx} \cdot y_{ak} = 0$

Durch geeignete Umformung lassen sich die folgenden Quotienten ermitteln:

$$\frac{x_a}{x_a - x_{ak}} = \frac{m_z \cdot g \cdot x_1 + F_2 \cdot (x_2 - x_1) + F_a \cdot (y_k - y_{12})}{-g \cdot m_a \cdot (x_1 - x_k)}$$

$$\frac{y_{ak}}{x_a - x_{ak}} = \frac{g}{a} \cdot \left( \frac{x_a}{x_a - x_{ak}} \right) + \frac{m_z (g \cdot x_1 - a \cdot y_k) + F_2 \cdot (x_2 - x_1) + F_a \cdot (y_k - y_{12})}{m_a \cdot a \cdot (x_1 - x_k)}$$

$$\frac{y_a}{x_a - x_{ak}} = \frac{m_z \cdot (g \cdot x_1 - a \cdot y_k) + F_2 (x_2 - x_1) + F_a (y_k - y_{12})}{(x_1 - x_k) \cdot (m_a \cdot a + m_z \cdot a - F_a)}$$

$$+ \frac{m_a \cdot g \cdot x_a + m_z \cdot a \cdot y_{ak} - F_a \cdot y_{ak}}{(x_a - x_{ak}) \cdot (m_a \cdot a + m_z \cdot a - \overline{F}_a)}$$

In diesen Gleichungen ist allerdings folgendes zu beachten:

♦ Der erste Quotient ($x_a/(x_a - x_{ak})$) ist anhand von Meßgrößen zu errechnen, die dann erfaßt werden, wenn $F_a > 0$ ist.
♦ Der zweite Quotient ($y_{ak}/(x_a - x_{ak})$) ist anhand von Meßgrößen zu errechnen, die dann erfaßt werden, wenn $F_a > 0$ ist und $a \neq 0$ ist.
♦ Der dritte Quotient ($y_a/(x_a - x_{ak})$) ist schließlich anhand von Meßgrößen zu errechnen, die dann erfaßt werden, wenn $F_a < 0$ ist.

Aufgrund der oben bestimmten Quotienten sind schließlich alle Größen bekannt und es kann der Wert von $F_{ky}$ wie folgt angegeben werden:

$$F_{ky} = \frac{\dfrac{m_z \cdot (g \cdot x_1 - a \cdot y_k) + F_2 (x_2 - x_1)}{y_k - y_{12}} - \dfrac{m_a (g \cdot x_a - a \cdot y_a) + m_z (a \cdot y_{ak} - a \cdot y_a)}{y_a - y_{ak}}}{\dfrac{x_1 - x_k}{y_k - y_{12}} + \dfrac{x_a - x_{ak}}{y_a - y_{ak}}}$$

Mit $N_1 := m_z \cdot (g \cdot x_1 - a \cdot y_k) + F_2 (x_2 - x_1)$ $\qquad K_1 := y_k - y_{12}$ $\qquad K_2 := x_1 - x_k$

$$F_{ky} = \frac{N_1 \cdot \dfrac{y_a - y_{ak}}{x_a - x_{ak}} - \dfrac{m_a \cdot a \cdot x_a}{x_a - x_{ak}} + \dfrac{m_a \cdot g \cdot y_a}{x_a - x_{ak}} + m_z \cdot a \cdot K_1 \cdot \dfrac{y_a - y_{ak}}{x_a - x_{ak}}}{K_1 + K_2 \cdot \dfrac{y_a - y_{ak}}{x_a - x_{ak}}}$$

Die oben eingeführten Terme N1 und K1 vereinfachen die weiterhin erfoderliche Gleichung für $F_{kx}$ wie folgt:

$$F_{kx} = \frac{N_1 - F_{ky} \cdot (x_1 + x_k)}{K_1}$$

Das gesuchte Verhältnis $F_{kx}/F_{ky}$ kann nunmehr ohne die Aufnahme der unsicheren Größe $F_a$ berechnet werden.

Für den Fall, daß die Vorder- und/oder Hinterachse aus zwei oder mehr Einzelachsen gebildet ist, werden die genannten Kräfte $F_1$ bzw. $F_2$ dadurch bestimmt, daß die Summe der erfaßten Kräfte jeder Einzelachse gebildet wird; als horizontale Koordinate der betreffenden Doppel- oder Mehrfachachse (d.h. $x_1$ bzw. $x_2$) wird jeweils der Mittelwert aus den Koordinaten aller Einzelachsen gebildet.

**Patentansprüche**

1. Verfahren zum Ermitteln der beim Bremsvorgang von einem Anhänger auf ein Zugfahrzeug ausgeübten Auflaufkraft, bei dem das Zugfahrzeug ein Lastkraftwagen mit Anhängerkupplung ist, bei dem die Auflaufkraft $F_k$ des Anhängers ausschließlich in horizontaler Richtung wirkt, wobei

   [a] das Kräftegleichgewicht

   $$F_1 + F_2 - m_z \cdot g = 0$$

   mit $F_1$ = Vorderachslast, $F_2$ = Hinterachslast, $m_z$ = Masse des LKW und g = Erdbeschleunigung, der am Zugfahrzeug in vertikaler Richtung wirkenden Kräfte bestimmt wird,
   [b] das Kräftegleichgewicht

   $$F_k + F_a - m_z \cdot a = 0$$

   mit $F_a$ = Antriebs/Bremskraft des LKW und a = Fahrzeugbeschleunigung, der am Zugfahrzeug in horizontaler Richtung wirkenden Kräfte bestimmt wird,
   [c] und bei dem aus dem vertikalen und horizontalen Kräftegleichgewicht und dem auf den Schwerpunkt S des Lastkraftwagens bezogenen Momentengleichgewicht die Auflaufkraft $F_k$ aus der Gleichung

   $$F_k = \frac{F_1 \left( x_1 - \frac{a}{g} \cdot y_{12} \right) + F_2 \left( x_2 - \frac{a}{g} \cdot y_{12} \right)}{y_{ak}}$$

   ermittelt wird, in der $x_1$, $x_2$ und $y_{12}$ die jeweilige relative Lage der Achsen des Lastkraftwagens zu seinem Schwerpunkt S und mit $y_{ak}$ der vertikale Abstand der Anhängerkupplung zur Radachse bezeichnet sind, wobei eine Eingabe von Meßwerten zur Ermittlung der Größen $x_1$ und $x_2$ zu dem Zeitpunkt erfolgt, zu dem sich das Fahrzeug in rollendem, unbeschleunigtem Zustand oder in Kräftefreiheit befindet, womit sich die Größen für $x_1$ und $x_2$ durch die Beziehungen

   $$x_1 = x_{12} \cdot \frac{F_2}{(F_2 - F_1)}$$

   und

   $$x_2 = x_{12} \cdot \frac{F_1}{(F_1 - F_2)}$$

   ergeben und daraus die in obiger Gleichung für die Auflaufkraft $F_k$ enthaltenen Werte $y_k$ und $y_{12}$ durch folgende Beziehung

$$y_k = \frac{F_1 \cdot x_1 + F_2 \cdot x_2 - F_a \cdot y_{ak}}{m_z \cdot a} = \frac{(F_1 \cdot x_1 + F_2 \cdot x_2 - F_a \cdot y_{ak})}{(F_1 + F_2)} \cdot \frac{g}{a}$$

$$y_{12} = y_{ak} - \frac{(F_1 \cdot x_1 + F_2 \cdot x_2 - F_a \cdot y_{ak})}{(F_1 + F_2)} \cdot \frac{g}{a}$$

ermittelt werden.

2. Verfahren nach Anspruch 1, dadurch gekennzeichnet, daß die Gleichung zur Berechnung der y-Koordinate der Anhängerkupplung $y_k$ mehrfach berechnet und anschließend der Mittelwert hieraus ermittelt wird.

3. Verfahren nach Anspruch 2, dadurch gekennzeichnet, daß die Berechnung von $y_k$ solange wiederholt wird, bis sich der Mittelwert kaum mehr ändert.

4. Verfahren zum Ermitteln der beim Bremsvorgang von einem Anhänger auf ein Zugfahrzeug ausgeübten Auflaufkraft, bei dem das Zugfahrzeug eine Sattelzugmaschine mit Sattelkupplung ist, wobei die Auflaufkraft $F_k$ des Aufliegers sowohl in horizontaler als auch in vertikaler Richtung wirkt, bei dem

[a] das Kräftegleichgewicht

$$F_1 + F_2 + F_{ky} - m_z \cdot g = 0$$

mit $F_1$ = Vorderachslast, $F_2$ = Hinterachslast, $F_{ky}$ = vertikale Sattelkraft, $m_z$ = Masse des LKW und g = Erdbeschleunigung,
der am Zugfahrzeug in vertikaler Richtung wirkenden Kräfte bestimmt wird,
[b] das Kräftegleichgewicht

$$F_{kx} + F_a - m_z \cdot a = 0$$

mit $F_{kx}$ = horizontale Sattelkraft, $F_a$ = Antriebs-/Bremskraft der Sattelzugmaschine, $m_z$ = Masse der Sattelzugmaschine und a = Fahrzeugbeschleunigung
der am Zugfahrzeug in horizontaler Richtung wirkenden Kräfte bestimmt wird,
bei dem zur Regelung der Bremskraft des Aufliegers das Verhältnis $F_{kx}/F_{ky}$ der horizontalen Komponente $F_{kx}$ zur vertikalen Komponente $F_{ky}$ der Auflaufkraft mit dem Verhältnis a/g der Fahrzeugbeschleunigung a zur Erdbeschleunigung g verglichen wird,
wobei bei einer Sattelzugmaschine, bei der die Vorderachslast $F_1$ nicht erfaßbar ist, zur Ermittlung des Verhältnisses $F_{kx}/F_{ky}$ zusätzlich das Momentengleichgewicht

$$F_1 \cdot x_1 + F_2 \cdot x_2 + F_{ky} \cdot x_k - F_a \cdot y_{12} - F_{kx} \cdot y_k = 0$$

herangezogen wird, bei dem $x_1$, $x_2$ die x-Koordinaten der Vorder- bzw. Hinterachse, $y_{12}$ die y-Koordinate der Achsen, $y_k$ die y-Koordinate der Sattelkupplung sind, wobei diese Koordinaten auf den Schwerpunkt S der Sattelzugmaschine bezogen sind, sowie folgende Quotienten ermittelt werden:

$$\frac{x_a}{x_a - x_{ak}} = \frac{m_z \cdot g \cdot x_1 + F_2 \cdot (x_2 - x_1) + F_a \cdot (y_k - y_{12})}{-g \cdot m_a \cdot (x_1 - x_k)}$$

$$\frac{y_{ak}}{x_a - x_{ak}} = \frac{g}{a} \cdot \left( \frac{x_a}{x_a - x_{ak}} \right) + \frac{m_z (g \cdot x_1 - a \cdot y_k) + F_2 \cdot (x_2 - x_1) + F_a \cdot (y_k - y_{12})}{m_a \cdot a \cdot (x_1 - x_k)}$$

$$\frac{y_a}{x_a - x_{ak}} = \frac{m_z (g \cdot x_1 - a \cdot y_k) + F_2 \cdot (x_2 - x_1) + F_a \cdot (y_k - y_{12})}{(x_1 - x_k) \cdot (m_a \cdot a + m_z \cdot a - F_a)}$$
$$+ \frac{m_a \cdot g \cdot x_a + m_z \cdot a \cdot y_{ak} - F_a \cdot y_{ak}}{(x_a - x_{ak}) \cdot (m_a \cdot a + m_z \cdot a - F_a)}$$

bei denen $m_a$ die Aufliegermasse, $x_a$ und $y_a$ die x- und y-Koordinaten der Aufliegerachse, $x_{ak}$ und $y_{ak}$ die x- und y-Koordinaten der Sattelkupplung sind, wobei diese Koordinaten auf den Schwerpunkt des Aufliegers bezogen sind,
wobei
der erste Quotient $x_a/(x_a - x_{ak})$ anhand von Meßgrößen zu errechnen ist, die dann erfaßt werden, wenn Fa > 0 ist,
der zweite Quotient $y_{ak}/(x_a - x_{ak})$ anhand von Meßgrößen zu errechnen ist, die dann erfaßt werden, wenn Fa > 0 ist und a ≠ 0 ist und
der dritte Quotient $y_a/(x_a - x_{ak})$ anhand von Meßgrößen zu errechnen ist, die dann erfaßt werden, wenn Fa < 0 ist.
und daraus die Werte von

$$F_{ky} = \frac{\dfrac{m_z \cdot (g \cdot x_1 - a \cdot y_k) + F_2 \cdot (x_2 - x_1)}{y_k - y_{12}} - \dfrac{m_a \cdot (g \cdot x_a - a \cdot y_a) + m_z \cdot (a \cdot y_{ak} - a \cdot y_a)}{y_a - y_{ak}}}{\dfrac{x_1 - x_k}{y_k - y_{12}} + \dfrac{x_a - x_{ak}}{y_a - y_{ak}}}$$

und

$$F_{kx} = \frac{N_1 - F_{ky} \cdot (x_1 + x_k)}{K_1}$$

mit

$$N_1 = m_z \cdot (g \cdot x_1 - a \cdot y_k) + F_2 \cdot (x_2 - x_1)$$

und

$$K_1 = y_k - y_{12}$$

bestimmt werden.

5. Verfahren nach Anspruch 4, dadurch gekennzeichnet, daß bei Sattelzugmaschinen, deren Vorder- und/oder Hinterachse aus zwei oder mehr Einzelachsen gebildet ist, die Kräfte $F_1$ bzw. $F_2$ dadurch bestimmt werden, daß die Summe der erfaßten Kräfte jeder Einzelachse gebildet wird und als horizontale Koordinate der betreffenden Doppel- oder Mehrfachachse $x_1$ bzw. $x_2$ jeweils der Mittelwert aus den Koordinaten aller Einzelachsen gebildet wird.

## Claims

1. A method for determining the running-up force exerted by a trailer upon a traction vehicle during a braking procedure, in which the traction vehicle is a lorry with a trailer coupling, in which the running-up force $F_k$ of the trailer acts exclusively in the horizontal direction, wherein

   (a) the equilibrium of forces

   $$F_1 + F_2 - m_z \cdot g = 0$$

   where $F_1$ = front axle load, $F_2$ = rear axle load, $m_z$ = mass of the lorry and g = acceleration due to gravity, of the forces acting upon the traction vehicle in the vertical direction is determined,
   (b) the equilibrium of forces

   $$F_k + F_a - m_z \cdot a = 0$$

   where $F_a$ = drive/braking force of the lorry and a = vehicle acceleration, of the forces acting upon the traction vehicle in the horizontal direction is determined,
   (c) and in which the running-up force $F_k$ is determined from the vertical and horizontal equilibrium of forces and the balance of moments in relation to the centre of gravity S of the lorry from the equation

   $$F_k = \frac{F_1(x_1 - \frac{a}{g} \cdot y_{12}) + F_2(x_2 - \frac{a}{g} \cdot y_{12})}{y_{ak}}$$

   in which $x_1$, $x_2$ and $y_{12}$ are the respective relative position of the axles of the lorry to its centre of gravity S and $y_{ak}$ represents the vertical distance of the trailer coupling from the wheel axle, an input of measurement values for determining the values $x_1$ and $x_2$ being effected at the moment in time when the vehicle is in the coasting, unaccelerating state or free of forces, the values for $x_1$ and $x_2$ resulting from the equations

   $$x_1 = x_{12} \cdot \frac{F_2}{(F_2 - F_1)}$$

   and

   $$x_2 = x_{12} \cdot \frac{F_1}{(F_1 - F_2)}$$

   and from this the values $y_k$ and $y_{12}$ contained in the above equation for the running-up force $F_k$ are determined by the following equation

$$Y_k = \frac{F_1 \cdot x_1 + F_2 \cdot x_2 - F_a \cdot Y_{ak}}{m_z \cdot a} = \frac{(F_1 \cdot x_1 + F_2 \cdot x_2 - F_a \cdot Y_{ak})}{(F_1 + F_2)} \cdot \frac{g}{a}$$

$$Y_{12} = Y_{ak} - \frac{(F_1 \cdot x_1 + F_2 \cdot x_2 - F_a \cdot Y_{ak})}{(F_1 + F_2)} \cdot \frac{g}{a}$$

2. A method according to claim 1, characterised in that the equation for calculating the y-coordinate of the trailer coupling $y_k$ is calculated a number of times and the mean value is then determined.

3. A method according to claim 2, characterised in that the calculation of $y_k$ is repeated until the mean value scarcely changes.

4. A method for determining the running-up force exerted by a trailer upon a traction vehicle during a braking procedure, in which the traction vehicle is a saddle traction machine with a saddle coupling, in which the running-up force $F_k$ of the semi-trailer acts both in the horizontal and in the vertical direction, in which

(a) the equilibrium of forces

$$F_1 + F_2 + F_{ky} - m_z \cdot g = 0$$

where $F_1$ = front axle load, $F_2$ = rear axle load, $F_{ky}$ = vertical saddle force, $m_z$ = mass of the lorry and g = acceleration due to gravity, of the forces acting upon the traction vehicle in the vertical direction is determined,

(b) the equilibrium of forces

$$F_{kx} + F_a - m_z \cdot a = 0$$

where $F_{kx}$ = horizontal saddle force, $F_a$ = drive/braking force of the saddle traction machine, $m_z$ = mass of the saddle traction machine and a = vehicle acceleration, of the forces acting upon the traction vehicle in the horizontal direction is determined, in which, in order to control the braking force of the semi-trailer, the ratio $F_{kx}/F_{ky}$ of the horizontal component $F_{kx}$ to the vertical component $F_{ky}$ of the running-up force is compared with the ratio a/g of the vehicle acceleration a to the acceleration due to gravity g, wherein, in order to determine the ratio $F_{kx}/F_{ky}$ in a saddle traction machine in which the front axle load $F_1$ cannot be determined, the balance of moments

$$F_1 \cdot x_1 + F_2 \cdot x_2 + F_{ky} \cdot x_k - F_a \cdot y_{12} - F_{kx} \cdot y_k = 0$$

is also taken into account, in which $x_1$, $x_2$ are the x-coordinates of the front and rear axles, $y_{12}$ is the y-coordinate of the axles, $y_k$ the y-coordinate of the saddle coupling, these coordinates being in relation to the centre of gravity S of the saddle traction machine, and the following quotients are determined:

$$\frac{x_a}{x_a - x_{ak}} = \frac{m_z \cdot g \cdot x_1 + F_2 \cdot (x_2 - x_1) + F_a \cdot (y_k - y_{12})}{- g \cdot m_a \cdot (x_1 - x_k)}$$

$$\frac{y_{ak}}{x_a - x_{ak}} = \frac{g}{a} \cdot \left(\frac{x_a}{x_a - x_{ak}}\right) + \frac{m_z(g \cdot x_1 - a \cdot y_k) + F_z \cdot (x_2 - x_1) + F_a \cdot (y_k - y_{12})}{m_a \cdot a(x_1 - x_k)}$$

$$\frac{y_a}{x_a - x_{ak}} = \frac{m_z(g \cdot x_1 - a \cdot y_k) + F_2 \cdot (x_2 - x_1) + F_a \cdot (y_k - y_{12})}{(x_1 - x_k) \cdot (m_a \cdot a + m_z \cdot a - F_a)}$$
$$+ \frac{m_a \cdot g \cdot x_a + m_z \cdot a \cdot y_{ak} - F_a \cdot y_{ak}}{(x_a - x_{ak}) \cdot (m_a \cdot a + m_z \cdot a - F_a)}$$

where $m_a$ is the semi-trailer mass, $x_a$ and $y_a$ the x and y coordinates of the semi-trailer axle, $x_{ak}$ and $y_{ak}$ the x and y coordinates of the saddle coupling, these coordinates being in relation to the centre of gravity of the trailer bed, wherein the first quotient $x_a/(x_a - x_{ak})$ is to be calculated with the aid of measurement values which are determined when $Fa > 0$, the second quotient $y_{ak}/(x_a - x_{ak})$ is to be calculated with the aid of measurement values which are determined when $Fa > 0$ and $a \neq 0$ and the third quotient $y_a/(x_a - x_{ak})$ is to be calculated with the aid of measurement values which are determined when $Fa < 0$, and these quotients are used to determine the values:

$$F_{ky} = \frac{\dfrac{m_z \cdot (g \cdot x_1) - a \cdot y_k) + F_2 \cdot (x_2 - x_1)}{y_k - y_{12}} - \dfrac{m_a \cdot (g \cdot x_a - a \cdot y_a) + m_z \cdot (a \cdot y_{ak} - a \cdot y_a)}{y_a - y_{ak}}}{\dfrac{x_1 - x_k}{y_k - y_{12}} + \dfrac{x_a - x_{ak}}{y_a - y_{ak}}}$$

and

$$F_{kx} = \frac{N_1 - F_{ky} \cdot (x_1 + x_k)}{K_1}$$

where

$$N_1 = m_z \cdot (g \cdot x_1 - a \cdot y_k) + F_2 \cdot (x_2 - x_1)$$

and

$$K_1 = y_k - y_{12}.$$

5. A method according to claim 4, characterised in that, in saddle traction machines where the front and/or rear axles is/are formed by two more individual axles, the forces $F_1$ and $F_2$ are determined by forming the sum of the determined forces of each individual axle and by taking the mean value from the coordinates of all individual axles as the horizontal coordinate of the relevant double or multiple axle $x_1$ or $x_2$.

**Revendications**

1. Procédé de détermination de la force d'inertie exercée par une remorque sur un tracteur pendant le freinage, le tracteur étant un camion avec un dispositif d'attelage de remorque, la force d'inertie $F_k$ de la remorque agissant exclusivement dans le sens horizontal, dans lequel

[a] on considère l'équilibre des forces

$$F_1 + F_2 - m_z \cdot g = 0$$

avec $F_1$ = charge sur l'essieu avant, $F_2$ = charge sur l'essieu arrière, $m_z$ = masse du camion et g = accélération due à la gravité, pour les forces agissant sur le tracteur dans le sens vertical,
[b] on considère l'équilibre des forces

$$F_k + F_a - m_z \cdot a = 0$$

avec $F_a$ = force motrice/force de freinage du camion et a = accélération du véhicule,
pour les forces agissant sur le tracteur dans le sens horizontal,
[c] et pour lequel à partir de l'équilibre des forces verticales et horizontales ainsi que de l'équilibre des moments par rapport au centre de gravité S du camion, la force d'inertie $F_k$ est déterminée à l'aide de l'équation

$$F_k = \frac{F_1\left(x_1 - \dfrac{a}{g}\cdot y_{12}\right) + F_2\left(x_2 - \dfrac{a}{g}\cdot y_{12}\right)}{y_{ak}}$$

où $x_1$, $x_2$ et $y_{12}$ représentent la position relative correspondante des essieux du camion par rapport à son centre de gravité S et où $Y_{ak}$ est la distance verticale du dispositif d'accouplement de la remorque par rapport à l'essieu, l'introduction des relevés pour déterminer les grandeurs $x_1$ et $x_2$ s'effectuant à un moment où le véhicule se trouve dans un état dynamique sans accélération ou non soumis à l'action des forces, les grandeurs pour $x_1$ et $x_2$ résultant des rapports

$$x_1 = x_{12}\cdot\frac{F_2}{(F_2 - F_1)}$$

et

$$x_2 = x_{12}\cdot\frac{F_1}{(F_1 - F_2)}$$

ce qui permet de déterminer les valeurs $y_k$ et $y_{12}$ dans l'équation ci-dessus pour la force d'inertie $F_k$, à l'aide de l'équation suivante

$$y_k = \frac{F_1 \cdot x_1 + F_2 \cdot x_2 - F_a \cdot y_{ak}}{m_z \cdot a} = \frac{(F_1 \cdot x_1 + F_2 \cdot x_2 - F_a \cdot y_{ak})}{(F_1 + F_2)} \cdot \frac{g}{a}$$

$$y_{12} = y_{ak} - \frac{(F_1 \cdot x_1 + F_2 \cdot x_2 - F_a \cdot y_{ak})}{(F_1 + F_2)} \cdot \frac{g}{a}$$

2. Procédé selon la revendication 1, caractérisé en ce que l'équation pour le calcul de la coordonnée y du dispositif d'attelage $y_k$ est calculée à plusieurs reprises, pour ensuite déterminer la moyenne.

3. Procédé selon la revendication 2, caractérisé en ce que le calcul de $y_k$ est répété juscu'à ce que la moyenne ne varie pratiquement plus.

4. Procédé de détermination de la force d'inertie exercée par une remorque sur un tracteur pendant le freinage, le tracteur étant un tracteur de semi-remorque avec sellette, où la force d'inertie $F_k$ de la semi-remorque agit aussi bien dans le sens horizontal que vertical, dans lequel

   [a] on considère l'équilibre des forces

$$F_1 + F_2 + F_{ky} - m_z \cdot g = 0$$

   où $F_1$ = charge sur l' essieu avant, $F_2$ = charge sur l'essieu arrière, $F_{ky}$ = force verticale de la sellette, $m_z$ = masse du camion et g = accélération due à la gravité,
   pour les forces agissant sur le tracteur dans le sens vertical,
   [b] on considère l'équilibre des forces

$$F_{kx} + F_a - m_z \cdot a = 0$$

   où $F_{kx}$ = force horizontale de la sellette, $F_a$ = force motrice/force de freinage du tracteur de semi-remorque, $m_z$ = masse du tracteur de semi-remorque et a = accélération du véhicule,
   pour les forces agissant sur le tracteur dans le sens horizontal,
   dans lequel on compare, pour le réglage de la force de freinage de la semi-remorque, le rapport $F_{kx}/F_{ky}$ de la composante horizontale $F_{kx}$ par rapport à la composante verticale $F_{ky}$ de la force d' inertie avec le rapport a/g de l'accélération du véhicule a par rapport à l'accélération due à la gravité g,
   où pour un tracteur de semi -remorque ne permettant pas de déterminer la charge sur l'essieu avant $F_1$ on utilise en plus l'équilibre des moments pour déterminer le rapport $F_{kx}/F_{ky}$.

$$F_1 \cdot x_1 + F_2 \cdot x_2 + F_{ky} \cdot x_k - F_a \cdot y_{12} - F_{kx} \cdot y_k = 0$$

   où $x_1$, $x_2$ sont les coordonnées x de l'essieu avant/arrière, $y_{12}$ la coordonnée y des essieux et $y_k$ la coordonnée y de la sellette, ces coordonnées se référant au centre de gravité S du tracteur de semi-remorque

$$\frac{x_a}{x_a - x_{ak}} = \frac{m_z \cdot g \cdot x_1 + F_2 \cdot (x_2 - x_1) + F_a \cdot (y_k - y_{12})}{-g \cdot m_a \cdot (x_1 - x_k)}$$

$$\frac{y_{ak}}{x_a - x_{ak}} = \frac{g}{a} \cdot \left( \frac{x_a}{x_a - x_{ak}} \right) + \frac{m_z (g \cdot x_1 - a \cdot y_k) + F_2 \cdot (x_2 - x_1) + F_a \cdot (y_k - y_{12})}{m_a \cdot a \cdot (x_1 - x_k)}$$

$$\frac{y_a}{x_a - x_{ak}} = \frac{m_z (g \cdot x_1 - a \cdot y_k) + F_2 \cdot (x_2 - x_1) + F_a \cdot (y_k - y_{12})}{(x_1 - x_k) \cdot (m_a \cdot a + m_z \cdot a - F_a)}$$
$$+ \frac{m_a \cdot g \cdot x_a + m_z \cdot a \cdot y_{ak} - F_a \cdot y_{ak}}{(x_a - x_{ak}) \cdot (m_a \cdot a + m_z \cdot a - F_a)}$$

et pour lesquelles on détermine les quotients suivants : $m_a$ étant la masse de la semi-remorque, $x_a$ et $y_a$ les coordonnées x et y de l'essieu de la semi-remorque, $x_{ak}$ et $y_{ak}$ les coordonnées x et y de la sellette, ces coordonnées se référant au centre de gravité de la semi-remorque,

dans lequel

le premier quotient $x_a/(x_a - x_{ak})$ sera calculé à l'aide de relevés, enregistrés quand Fa > 0,

le deuxième quotient $y_{ak}/(x_a - x_{ak})$ sera calculé à l'aide de relevés, enregistrés quand Fa > 0 et a # 0 et

le troisième quotient $y_a/(x_a - x_{ak})$ sera calculé à l'aide de relevés, enregistrés quand Fa < 0.

Pour ensuite déterminer les valeurs de

$$F_{ky} = \frac{\dfrac{m_z \cdot (g \cdot x_1 - a \cdot y_k) + F_2 \cdot (x_2 - x_1)}{y_k - y_{12}} - \dfrac{m_a \cdot (g \cdot x_a - a \cdot y_a) + m_z \cdot (a \cdot y_{ak} - a \cdot y_a)}{y_a - y_{ak}}}{\dfrac{x_1 - x_k}{y_k - y_{12}} + \dfrac{x_a - x_{ak}}{y_a - y_{ak}}}$$

et

$$F_{kx} = \frac{N_1 - F_{ky} \cdot (x_1 + x_k)}{K_1}$$

où

$$N_1 = m_z \cdot (g \cdot x_1 - a \cdot y_k) + F_2 \cdot (x_2 - x_1)$$

et

$$K_1 = y_k - y_{12}$$

5. Procédé selon la revendication 4, caractérisé en ce que pour les semi-remorques dont l'essieu avant et/ou arrière comprend deux essieux individuels ou plus, les forces $F_1$ et $F_2$ sont déterminées par la somme des forces enregistrées de chaque essieu individuel et l'on effectue la moyenne des coordonnées de tous les essieux individuels sous forme de coordonnée horizontale de l'essieu double ou multiple $x_1$ ou $x_2$ correspondant.

## Fig. 1

## Fig. 2

## Fig. 3